# EUROPÄISCHE PATENTANMELDUNG

(11) **EP 2 487 334 A1**
(43) Veröffentlichungstag der Anmeldung: **15.08.2012**
(21) Anmeldenummer: 11153064.8
(22) Anmeldetag: 02.02.2011
(51) Int. Cl.: F01D 21/00, F01D 25/12

(54) **Verfahren zum Abkühlen einer mit einem Rotor ausgestatteten Turbomaschine**

(71) Anmelder: SIEMENS AKTIENGESELLSCHAFT, 80333 München (DE)
(72) Erfinder: Becher, Stefan, 57290 Neunkirchen (DE); Ceric, Hajrudin, 47259 Duisburg (DE); Schaab, Stefan, 91058 Erlangen (DE); Skreba, Steffen, Dr., 91077 Neunkirchen am Brand (DE); Weber, Udo, 47661 Issum (DE)

(57) **Zusammenfassung**

Die Erfindung betrifft ein Verfahren zum Abkühlen bzw. zur beschleunigten Abkühlung einer mit einem Rotor ausgestatteten Turbomaschine nach Beendigung des bestimmungsgemäßen Turbomaschinenbetriebs, welches die Schritte umfasst:
- Absenken der Drehzahl des Rotors auf eine erste, unterhalb der Nenndrehzahl liegende Rotordrehzahl,
- Drehen des Rotors bei der ersten Rotordrehzahl durch einen Hilfsantrieb für eine vorbestimmte Zeitspanne und
- Erhöhen der Rotordrehzahl nach Ablauf der vorbestimmten Zeitspanne durch den Hilfsantrieb. Um Beschädigungen der Turbomaschine zu vermeiden, die entweder aufgrund von durch eine entsprechende Rotordrehzahl angeregte Laufschaufelschwingungen auftreten oder durch eine zu schnelle Temperaturabsenkung, wird vorgeschlagen, dass nach der Drehzahlerhöhung die Drehzahl des Rotors während einer weiteren Zeitspanne stetig variiert.

## Beschreibung

Die Erfindung betrifft ein Verfahren zum Abkühlen einer mit einem Rotor ausgestatteten Turbomaschine nach der Beendigung des bestimmungsgemäßen Turbomaschinenbetriebs, umfassend die Schritte:
- Absenken der Drehzahl des Rotors auf eine erste, unterhalb der Nenndrehzahl liegende Rotordrehzahl und
- Drehen des Rotors bei der ersten Rotordrehzahl durch einen Hilfsantrieb für eine vorbestimmte Zeitspanne.

Turbomaschinen und deren Betriebsweisen sind aus dem umfangreichen Stand der Technik in vielfältiger Art und Weise bekannt. Turbomaschinen können beispielsweise als Verdichter, als Gasturbinen oder auch als Dampfturbinen ausgestaltet sein, wobei man bei Gasturbinen zwischen einer stationären Anwendung zur Energieerzeugung und Flugzeugtriebwerken unterscheidet. Bei allen vorgenannten Turbomaschinen werden, sofern in axialer Bauart ausgestaltet, ringförmige Strömungskanäle von einem Arbeitsmedium durchströmt, wobei im Strömungskanal zumeist kaskadierend mehrere Schaufelstufen angeordnet sind, an denen das Arbeitsmedium Arbeit verrichtet - beispielsweise in den Turbineneinheiten von Gasturbinen und bei Dampfturbinen - oder bei denen die Beschaufelung dem Arbeitsmedium Energie zuführt - beispielsweise bei Verdichtern. Abhängig von der jeweiligen Turbomaschine tritt während des bestimmungsgemäßen Betriebs im Arbeitsmedium eine Arbeitstemperatur auf, welche wesentlich höher ist als die Umgebungstemperatur. Folglich heizen sich die Gehäuse und Rotoren der Turbomaschine partiell auch bis auf die Arbeitstemperatur auf.

Nach dem Abschalten kühlen dann die äußeren Gehäusebauteile und der Rotor unterschiedlich schnell ab, was ungewünscht ist.

Sofern nach dem Abschalten der betreffenden Turbomaschine Inspektions-, Service- und/oder Wartungsarbeiten durchzuführen sind, ist es wünschenswert, dass diese so schnell wie möglich begonnen werden können, um die Verfügbarkeit der Turbomaschine so groß wie möglich zu halten.

Um die im Inneren gespeicherte Wärme aus der Turbomaschine schneller abzuführen und ein Verkrümmen des Rotors zu vermeiden ist es Stand der Technik, den Rotor nach Abschluss des bestimmungsgemäßen Betriebs zu drehen. Dieser Drehbetrieb wird zumeist mit einer stark verminderten Drehzahl durchgeführt, wobei der Rotor von einem Hilfsaggregat angetrieben wird. Dieses Hilfsaggregat kann beispielsweise ein Anfahrumrichter, ein an die Gasturbine oder Dampfturbine angeschlossener Generator oder auch ein Hydraulikmotor sein. Zur Vorbereitung von Wartungsarbeiten wird der Drehbetrieb üblicherweise so lange durchgeführt, bis mit großer Sicherheit gewährleistet werden kann, dass selbst der im Inneren der Turbomaschine angeordnete Rotor annähernd auf Umgebungstemperatur abgekühlt ist.

Während des Drehbetriebs wird von der Beschaufelung zumeist Umgebungsluft durch den Ringkanal gefördert, was die Auskühlung einerseits beschleunigt und andererseits einen Wärmestau im Inneren vermeidet. Für den Fall, dass während des Drehbetriebs keine Umgebungsluft durch den Strömungskanal gefördert wird, wird durch die stetige Verwirbelung der im Inneren vorhandenen Luftmenge der Wärmeübergang von innen nach außen insgesamt verbessert.

Aufgabe der Erfindung ist die Bereitstellung eines Verfahrens zum Abkühlen einer mit einem Rotor ausgestatteten Turbomaschine, bei dem mechanische Beschädigungen der Turbomaschine sicher vermieden werden und durch dessen Anwendung die Turbomaschine besonders schnell abgekühlt wird, ohne das die voran beschriebenen Nachteile auftreten. Weitere Aufgabe der Erfindung ist die Bereitstellung eines Verfahrens, welches die Verfügbarkeit einer Turbomaschine erhöht.

Die Aufgabe wird durch ein Verfahren gemäß den Merkmalen des Anspruchs 1 gelöst. Weitere vorteilhafte Merkmale der Erfindung sind in den Unteransprüchen angegeben und können in beliebiger Art und Weise miteinander kombiniert werden, sofern nicht offensichtliche Widersprüche einer Kombination entgegenstehen.

Das erfindungsgemäße Verfahren sieht vor, dass zum Abkühlen einer mit einem Rotor ausgestatteten Turbomaschine nach der Beendigung des bestimmungsgemäßen Turbomaschinenbetriebs die nachfolgenden Schritte durchgeführt werden:
- Absenken der Drehzahl des Rotors auf eine erste, unterhalb der Nenndrehzahl liegende Rotordrehzahl,
- Drehen des Rotors bei der ersten Rotordrehzahl durch einen Hilfsantrieb für eine vorbestimmte Zeitspanne und
- Erhöhen der Rotordrehzahl nach Ablauf der vorbestimmten Zeitspanne durch den Hilfsantrieb, wobei nach der Drehzahlerhöhung die Rotordrehzahl während einer weiteren Zeitspanne stetig variiert.

Der Erfindung liegt die Erkenntnis zu Grunde, dass die Zeitdauer zum Abkühlen der Turbomaschine auf annähernd Umgebungstemperatur wesentlich verkürzt werden kann, wenn der weiter oben bezeichnete Drehbetrieb nicht über die gesamte Zeitdauer bei nur einer konstanten Drehzahl durchgeführt wird. Die Erfindung schlägt vor, dass nach Ablauf der vorbestimmten Zeitspanne die Rotordrehzahl erhöht wird und nach der Erhöhung der Rotor mit einer variierenden Rotordrehzahl während einer weiteren Zeitspanne durch den Hilfsantrieb angetrieben wird.

Das Erhöhen der Rotordrehzahl nach dem Ablauf der vorbestimmten Zeitspanne führt dazu, dass die Umwälzung des im Strömungskanal vorhandenen Mediums weiter verstärkt wird. Hierdurch kann ein erhöhter Wärmefluss aus dem Inneren zum Äußeren der Turbomaschine erreicht werden, was insgesamt das Abkühlen der Turbomaschine beschleunigt. Zu beachten ist jedoch dabei, dass eine übermassige Erhöhung der Rotordrehzahl jedoch einen Temperaturgradienten bei bestimmten Maschinenkomponenten hervorrufen kann, der dazu führt, dass aufgrund der großen transienten thermischen Belastung Beschädigungen im Material der Maschinenkomponente eintreten. Um dies zu vermeiden, erfolgt die Erhöhung der Drehzahl auf eine maximale mittlere Drehbetriebs-Rotordrehzahl vorzugsweise schrittweise.

Gleichzeitig wurde von den Erfindern erkannt, dass auch im Drehbetrieb bei einzelnen Rotordrehzahlen Schaufelschwingungen auftreten können, die ebenfalls ungewünschte mechanische Belastungen hervorrufen. Um zu vermeiden, dass Laufschaufeln aufgrund der Rotordrehzahl in Resonanz geraten und dabei Schaden nehmen, wird vorgeschlagen, dass nach der Drehzahlerhöhung die Drehzahl während der weiteren Zeitspanne stetig variiert. Da erfindungsgemäß die Drehzahl während der weiteren Zeitspanne nicht mehr konstant ist, wird wirksam das Auftreten von Schaufelschwingungen vermieden, die durch Resonanz erzeugt werden würden bei längerer Übereinstimmung von Schaufeleigenfrequenz und Rotordrehzahl. Dieses Verfahren ist dabei umso bedeutsamer und wirkungsvoller, je mehr Schaufelstufen die betreffende Turbomaschine umfasst. Da erfahrungsgemäß Gasturbinen, Dampfturbinen und auch Verdichter größerer Leistungsklasse häufig in axialer Bauart mit einer Vielzahl von Schaufelstufen ausgebildet sind, ist das erfindungsgemäße Verfahren insbesondere für derartige Turbomaschinen besonders vorteilhaft, da für die Vielzahl an Schaufelstufen ebenso viele schaufelstufenspezifische Resonanzfrequenzen vorhanden sind, die aber aufgrund der stetig variierenden Drehzahl nur kurzzeitig angeregt werden, wodurch materialschädigende Schwingungsamplituden in den betreffenden Laufschaufeln vermieden werden.

Gemäß einer ersten vorteilhaften Ausgestaltung des Verfahrens ist die stetige Drehzahlvariation periodisch mit einer um eine mittlere Rotordrehzahl schwankenden Amplitude. In diesem Fall variiert die Drehzahl des Rotors während der weiteren Zeitspanne periodisch stets zwischen einer für diese weitere Zeitspanne minimalen Rotordrehzahl und einer für diese Zeitspanne maximalen Rotordrehzahl. Selbstverständlich ist die Periodizität so gewählt, dass innerhalb der weiteren Zeitspanne eine Vielzahl von Perioden auftreten.

Dieser Verfahrensschritt hat den Vorteil, dass ein maximaler Wärmeübergangskoeffizient nicht überschritten wird und gleichzeitig das Auftreten von Schaufelschwingungen aufgrund von Resonanzanregung durch die korrespondierende Drehzahl des Rotors vermieden wird. Letzteres verhindert das Auftreten von Materialdefekten in Maschinenkomponenten.

Eine weitere vorteilhafte Ausgestaltung sieht vor, dass sukzessiv mehrere weitere Zeitspannen mit jeweils erhöhter mittlerer Rotordrehzahl vorgesehen sind. Beispielsweise können insgesamt drei, vier, fünf oder auch noch mehr weitere Zeitspannen vorgesehen sein, bei denen die jeweils ihnen zugeordneten mittleren Rotordrehzahlen schrittweise erhöht sind. Vorzugsweise bleibt die Amplitude der periodischen Drehzahlvariation konstant. Dieses Verfahren hat den Vorteil, dass nach Abschluss des bestimmungsgemäßen Turbomaschinenbetriebs die Turbomaschine für die vorbestimmte Zeitdauer zuerst mit einer vergleichsweise geringen konstanten Drehzahl betrieben wird, wodurch sich die Materialtemperatur vergleichsweise langsam der Umgebungstemperatur annähert. Nach Ablauf der vorbestimmten Zeitspanne wird die Auskühlung bzw. das Abkühlen der Turbomaschine beschleunigt, indem für eine erste weitere Zeitspanne der Rotor mit erhöhter Drehzahl betrieben wird, und die Drehzahl um die mittlere Drehzahl stetig variiert. Je näher sich die aktuelle Materialtemperatur der Turbomaschine an die Umgebungstemperatur annähert, umso größer kann die Drehzahl gewählt werden, mit der der Rotor angetrieben wird. Aufgrund der so für den aktuellen Zeitpunkt jeweils angepassten Abkühlungsrate können Beschädigungen im Material von Maschinenkomponenten sicher vermieden werden. Gleichzeitig ist stets sichergestellt, dass Schaufelschwingungen aufgrund von Resonanzanregung durch den Rotor vermieden werden, da während jeder Zeitspanne die Rotordrehzahl stetig variiert, vorzugsweise periodisch um die mittlere Rotordrehzahl.

Vorzugsweise erfolgen innerhalb einer Periode die Drehzahlzunahme und/oder die Drehzahlabnahme mit konstantem oder veränderlichem Gradienten. Mit anderen Worten: die Periodenform kann beispielsweise einer Dreieckkurve oder einer Sinusschwingung entsprechen. Auch ist denkbar, dass die Drehzahländerung bzw. der Drehzahlverlauf innerhalb einer Periode einer Sägezahnform angenähert ist. Die Sägezahnform hat prinzipiell eine derart stark abfallende Flanke, dass der Wechsel von ihrer Maximalamplitude auf ihre Minimalamplitude sprunghaft erfolgt. Diesen Sprung kann die Rotordrehzahl jedoch nicht nachahmen. Insofern kann der Rotordrehzahlverlauf während der Drehzahlvariation auch nur an die Sägezahnform angenähert sein. De facto zeichnet sich somit die Drehzahlvariation in Annäherung an die Sägezahnform dadurch aus, dass der Betrag des Drehzahlgradienten bei der ansteigenden Flanke wesentlich kleiner ist als der Betrag des Drehzahlgradienten bei der abfallenden Flanke.

Zweckmäßigerweise wird nach dem Ablauf der letzten Zeitspanne die Rotordrehzahl unverzüglich auf Null abgesenkt.

Das erfindungsgemäße Verfahren eignet sich für eine Vielzahl von unterschiedlich ausgestalteten Turbomaschinen. Beispielsweise kann die Turbomaschine als Dampfturbine ausgebildet sein, wobei der bestimmungsgemäße Betrieb der Dampfturbine dann mit dem Stopp der Durchströmung der Dampfturbine mit Dampf endet. Die Turbomaschine kann auch als Gasturbine ausgebildet sein. In diesem Fall endet der bestimmungsgemäße Betrieb der Gasturbine mit dem Abschalten der Befeuerung. Wenn die Turbomaschine als Verdichter ausgebildet ist, endet der bestimmungsgemäße Betrieb des Verdichters durch die Absenkung der Rotordrehzahl auf eine Drehzahl kleiner 50% der Nenndrehzahl.

Eine weiter beschleunigte Abkühlung kann bei Turbomaschinen, die entweder als Gasturbine oder als Verdichter ausgebildet sind, erreicht werden, wenn nach Ablauf der vorbestimmten Zeitspanne eine stromauf der Gasturbine bzw. des Verdichters angeordnete Lufteinlassklappe geöffnet wird. In diesem Fall wird die im Strömungskanal vorhandene Luft durch die Laufschaufeln nicht nur umgewälzt, sondern stetig durch vergleichsweise kühle Umgebungsluft erneuert, was den Abtransport der im Inneren der Turbomaschine gespeicherten Wärmeenergie weiter beschleunigt. Auch dies führt zu einer weiter verkürzten Zeitdauer zum Abkühlen einer Turbomaschine auf Umgebungstemperatur.

Die mittleren Rotordrehzahlen, die jeweiligen Amplituden und die jeweiligen Betriebsdauern der weiteren Zeitspannen sind insgesamt maschinentypisch und hängen somit von der individuellen Konstruktion, Größe und Leistungsklasse der Turbomaschine sowie von weiteren betrieblichen Randbedingungen wie etwa Umgebungs- und Bauteiltemperaturen ab.

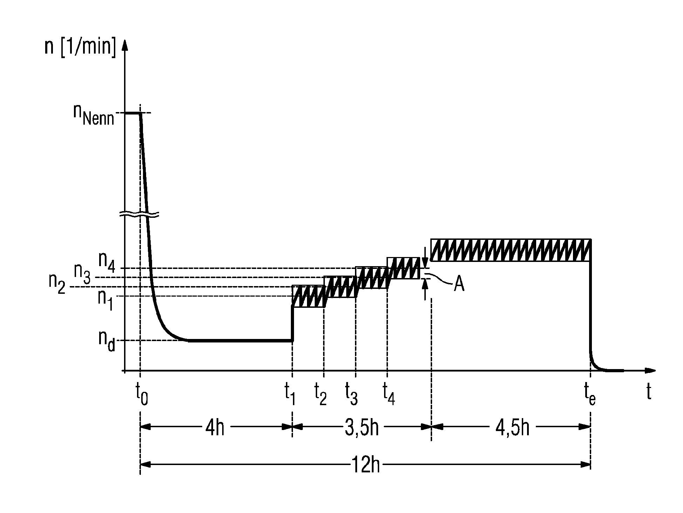

Figur 1 zeigt ein Drehzahl-Zeit-Diagramm eines Rotors einer Turbomaschine nach der Beendigung des bestimmungsgemäßen Turbomaschinenbetriebs.

Die einzige Figur zeigt ein Drehzahl-Zeit-Diagramm für den Rotor einer Gasturbine. Diese dient im Ausführungsbeispiel als Beispiel für eine beliebige Turbomaschine. Die Gasturbine wird zur Stromerzeugung in großem kommerziellem Umfang eingesetzt und ist somit stationär angeordnet. Vor der Beendigung des bestimmungsgemäßen Gasturbinenbetriebs dreht der Rotor mit einer konstanten Drehzahl n_{Nenn}. Bei Gasturbinen, die an einen Generator angekoppelt sind, der elektrischen Strom mit einer Frequenz von 50 Hz erzeugt, beträgt die Rotordrehzahl n_{Nenn} 3000 min⁻¹. Bei 60 Hz Netzfrequenz beträgt die Drehzahl des Gasturbinen-Generatorstrangs 3600 min⁻¹; jeweils vorausgesetzt, dass zwischen Gasturbinenrotor und Generatorrotor eine starre Kopplung vorgesehen ist und kein Getriebe.

Der bestimmungsgemäße Gasturbinenbetrieb endet zum Zeitpunkt t₀ durch das Schließen aller Brennstoffventile, wodurch die Flamme erlischt. Unmittelbar nach der Beendigung des bestimmungsgemäßen Gasturbinenbetriebs wird die Drehzahl n des Rotors auf eine erste unterhalb der Nenndrehzahl n_{Nenn} liegende Rotordrehzahl n_{d} abgesenkt. Anschließend wird der Rotor für eine vorbestimmte Zeitspanne durch einen Hilfsantrieb, beispielsweise einen Anfahrumrichter, bei konstanter erster Rotordrehzahl n_{d} angetrieben. Ob dabei die vorbestimmte Zeitspanne auch diejenige Zeitdauer umfasst, die benötigt wird, um den Rotor von der Nenndrehzahl n_{Nenn} auf die erste Rotordrehzahl n_{d} abzusenken, ist für die Erfindung unerheblich.

Im gezeigten Ausführungsbeispiel beträgt die vorbestimmte Zeitspanne inklusive der Zeitdauer vier Stunden. Sie kann selbstverständlich auch größer oder kleiner gewählt werden, je nach Art, Größe und Ausgestaltung der Turbomaschine, die mit Hilfe des erfindungsgemäßen Verfahrens annähernd auf Umgebungstemperatur abgekühlt werden soll.

Zum Zeitpunkt t₁ endet die vorbestimmte Zeitspanne. Danach wird die Drehzahl n des Rotors mit Hilfe des eingangs genannten Hilfsantriebs erhöht. Nach der Erhöhung der Rotordrehzahl variiert diese stetig innerhalb einer ersten weiteren Zeitspanne - zwischen dem Zeitpunkt t₁ und dem Zeitpunkt t₂. Während dieser ersten weiteren Zeitspanne schwankt die Rotordrehzahl um eine erste mittlere Rotordrehzahl n₁ mit gleichbleibender Amplitude. Daraus ergibt sich, dass während der ersten weiteren Zeitspanne die aktuelle Drehzahl innerhalb eines ersten Drehzahlbandes periodisch schwankt. Vorzugsweise nimmt die Drehzahl von einer für die erste weitere Zeitspanne (bzw. für das erste Drehzahlband) minimalen Rotordrehzahl mit konstanter Drehzahländerung bis auf eine für die erste weitere Zeitspanne (bzw. für das erste Drehzahlband) maximalen Rotordrehzahl linear zu, um anschließend mit wesentlich größeren Gradienten auf die für die erste Zeitspanne minimale Rotordrehzahl abzufallen. Danach wird dieser an die Sägezahnform angenäherte Verlauf der Drehzahl innerhalb der ersten weiteren Zeitspanne vielfach erneut durchgeführt. Mit Erreichen des Zeitpunkts t₂ endet die erste weitere Zeitspanne und beginnt eine zweite weitere Zeitspanne. Die mittlere Rotordrehzahl der zweiten weiteren Zeitspanne ist gegenüber der mittleren Rotordrehzahl der ersten weiteren Zeitspanne erhöht. Vorzugsweise bleibt die Amplitude konstant, so dass innerhalb eines zweiten Drehzahlbands die Drehzahl vielfach variiert.

Gemäß dem gezeigten Rotordrehzahlverlauf sind insgesamt sechs weitere Zeitspannen vorgesehen, deren jeweilige mittlere Rotordrehzahl sukzessive erhöht worden ist, wobei innerhalb jeder weiteren Zeitspanne die aktuelle Drehzahl weiterhin ständig um die jeweilige mittlere Rotordrehzahl schwankt. Die schrittweise Erhöhung der mittleren Rotordrehzahl wird so lange fortgeführt, bis eine für den hiermit beschriebenen Abkühlbetrieb maximale Rotordrehzahl erreicht wird. Diese für den Abkühlbetrieb maximale Rotordrehzahl beträgt beispielsweise 1/5 der Nenndrehzahl n_{Nenn} des Rotors der Gasturbine und errechnet sich dabei aus der mittleren Rotordrehzahl der letzten der weiteren Zeitspannen zuzüglich der Amplitude, mit der die Drehzahlvariation innerhalb dieser periodisch durchgeführt wird. Gemäß dem dargestellten Verfahren dauert die letzte der weiteren Zeitspannen 4,5 Stunden. Zum Zeitpunkt tₑ endet die letzte der weiteren Zeitspannen. Anschließend wird die Rotordrehzahl unverzüglich auf 0 min⁻¹ abgesenkt. Dadurch ist das Verfahren zum Abkühlen einer mit einem Rotor ausgestatteten Turbomaschine abgeschlossen.

Insgesamt wird mit der Erfindung ein Verfahren zum Abkühlen bzw. zur beschleunigten Abkühlung einer mit einem Rotor ausgestatteten Turbomaschine nach Beendigung des bestimmungsgemäßen Turbomaschinenbetriebs angegeben, welches die Schritte umfasst:
- Absenken der Drehzahl des Rotors auf eine erste, unterhalb der Nenndrehzahl liegende Rotordrehzahl,
- Drehen des Rotors bei der ersten Rotordrehzahl durch einen Hilfsantrieb für eine vorbestimmte Zeitspanne und
- Erhöhen der Rotordrehzahl nach Ablauf der vorbestimmten Zeitspanne durch den Hilfsantrieb. Um Beschädigungen der Turbomaschine zu vermeiden, die entweder aufgrund von durch eine entsprechende Rotordrehzahl angeregte Laufschaufelschwingungen auftreten oder durch eine zu schnelle Temperaturabsenkung, wird vorgeschlagen, dass nach der Drehzahlerhöhung die Drehzahl des Rotors während einer weiteren Zeitspanne stetig variiert.

## Patentansprüche

1. Verfahren zum Abkühlen einer mit einem Rotor ausgestatteten Turbomaschine nach der Beendigung des bestimmungsgemäßen Turbomaschinenbetriebs,
umfassend die Schritte:
- Absenken der Drehzahl des Rotors auf eine erste, unterhalb der Nenndrehzahl liegende Rotordrehzahl,
- Drehen des Rotors bei der ersten Rotordrehzahl durch einen Hilfsantrieb für eine vorbestimmte Zeitspanne und
- Erhöhen der Rotordrehzahl nach Ablauf der vorbestimmten Zeitspanne durch den Hilfsantrieb,
**dadurch gekennzeichnet, dass**
nach der Drehzahlerhöhung die Rotordrehzahl während einer weiteren Zeitspanne stetig variiert.

2. Verfahren nach Anspruch 1,
bei dem die stetige Drehzahlvariation periodisch ist mit einer um eine mittlere Rotordrehzahl schwankenden Amplitude.

3. Verfahren nach Anspruch 2,
bei dem sukzessive mehrere weitere Zeitspannen mit jeweils weiter erhöhter mittlerer Rotordrehzahl vorgesehen sind.

4. Verfahren nach einem der Ansprüche 2 oder 3,
bei dem innerhalb einer Periode die Drehzahlzunahme und/oder die Drehzahlabnahme mit konstantem oder veränderlichem Gradienten erfolgen.

5. Verfahren nach einem der Ansprüche 1 bis 4,
bei dem unverzüglich nach dem Ablauf der letzten Zeitspanne die Rotordrehzahl auf Null abgesenkt wird.

6. Verfahren nach einem der Ansprüche 1 bis 5,
bei dem die Turbomaschine als Dampfturbine ausgebildet ist und der bestimmungsgemäße Betrieb der Dampfturbine mit dem Stopp der Durchströmung der Dampfturbine mit Dampf endet.

7. Verfahren nach einem der Ansprüche 1 bis 5,
bei dem die Turbomaschine als Gasturbine ausgebildet ist und der bestimmungsgemäße Betrieb der Gasturbine mit dem Abschalten der Befeuerung endet.

8. Verfahren nach einem der Ansprüche 1 bis 5,
bei dem die Turbomaschine als Verdichter ausgebildet ist und der bestimmungsgemäße Betrieb des Verdichters durch die Absenkung der Rotordrehzahl auf eine Drehzahl kleiner 50% von der Nenndrehzahl endet.

9. Verfahren nach Anspruch 7 oder 8,
bei dem nach Ablauf der vorbestimmten Zeitspanne eine stromauf der Gasturbine bzw. des Verdichters angeordnete Lufteinlassklappe geöffnet wird.
